# EUROPEAN PATENT APPLICATION

(11) **EP 0 999 671 A2**
(43) Date of publication of application: **10.05.2000**
(21) Application number: 99308717.0
(22) Date of filing: 03.11.1999
(51) Int. Cl.: H04L 12/28, H04L 12/56, H04L 29/06

(54) **Transmission method and transmission device**

(30) Priority: 04.11.1998 JP 31356698
(71) Applicant: SONY CORPORATION, Tokyo (JP)
(72) Inventor: Sugaya, Shigeru, Sony Corporation, Tokyo (JP); Yoshida, Hidemasa, Sony Corporation, Tokyo (JP); Kamo, Takanobu, Sony Corporation, Tokyo (JP); Sugita, Takehiro, Sony Corporation, Tokyo (JP)
(74) Representative: Nicholls, Michael John

(57) **Abstract**

Assembly or segmentation is conducted on data packetized in a predetermined form so as to be transmitted via a wire transmission path, and thereby data having a quantity of one unit for radio transmission is produced. Data concerning the assembly or segmentation of the packet structure is added to data produced as a result of the assembly or segmentation, as overhead information. The data having the overhead information added thereto is provided with a data structure for radio transmission. Radio transmission of the data provided with the data structure for radio transmission is conducted via a radio transmission path. And a reception side of the radio-transmitted data judges the packet structure on the basis of the received overhead information, and conducts processing for restoring the original packet structure. Thus, data of any format transmitted via a wire transmission path can be transmitted via a radio transmission path efficiently.

## Description

The present invention relates to a transmission method used to relay and transmit data transmitted over a wire transmission path via a radio transmission path, and a transmission device using the transmission method.

### Description of the Related Art

Heretofore, a system called IEEE 1394 interface has been developed as a system for transmitting data, such as digital image data, computer program data or the like having relatively large information contents between a plurality of devices. In this IEEE 1394 interface, connection between a plurality of devices for conducting data transmission is performed by using a bus line of a predetermined standard, and packetized data are transmitted to a desired destination.

For carrying out data transmission using this IEEE 1394 interface, there are prepared an isochronous transfer mode (isochronous transmission mode) for conducting broadcast transmission efficiently on data such as image data or the like having a relatively large data quantity, and an asynchronous transfer mode (asynchronous transmission mode) for securely transmitting data such as control data or the like having a relatively small data quantity.

By conducting data transmission by using this IEEE 1394 interface system, various data can be transmitted to an arbitrary destination connected via a bus line.

By the way, the IEEE 1394 interface system is a system for conducting data transmission by using a wire bus line. There is a problem that data conforming to this system cannot be subjected to radio transmission as it is. In other words, in the IEEE 1394 interface system, a relatively short packet length is set as the unit of data transmission, and data of the packet unit are adapted to be successively transmitted. If radio transmission is to be conducted, however, then typically a frame period having a duration longer than the packet length for wire transmission is stipulated, the transmission side and the reception side are synchronized at that frame period, and data transmission is conducted. Therefore, data to be transmitted over a wire bus line according to the IEEE 1394 interface system or tne like cannot be subjected to radio transmission as it is.

Furthermore, when conducting radio transmission, transmission of various control data for securing a radio transmission path is necessary. From this point as well, data to be transmitted over a wire bus line cannot be subjected to radio transmission as it is.

Heretofore, as a method proposed as processing for conducting radio transmission on data transmitted over a wire transmission path, there is a system in which a transmission band such as a transmission channel, a transmission slot or the like is secured beforehand prior to radio transmission and data transmission is conducted via the secured radio transmission path. In such a system, however, it is necessary to detect a maximum transmission capacity of the data transmission beforehand and secure a radio transmission path so as to be capable of transmitting data of the maximum transmission capacity. If data of the IEEE 1394 interface system or the like which is large in data transmission quantity change is transmitted, therefore, then the possibility of the transmission capacity of the radio transmission path being wasted is high, and it is undesirable from the viewpoint of the transmission efficiency. Especially, in the case where dynamic image data are transmitted continuously for a long period of time, it is suitable to thus secure a radio transmission path beforehand and then transmit data. However, it is not suitable for such data transmission that communication is completed in a short period of time.

An object of the present invention is to make it possible to transmit data transmitted over a wire transmission path, via a radio transmission path efficiently, no matter what format the data has.

A transmission method of the present invention includes the steps of conducting assembly or segmentation on data packetized in a predetermined form so as to be transmitted via a wire transmission path, and thereby producing data having a data quantity of one unit for radio transmission; adding data concerning the assembly or segmentation of the packet structure to data produced as a result of the assembly or segmentation as overhead information; providing the data having the overhead information added thereto with a data structure for radio transmission; conducting radio transmission of the converted data via a predetermined radio transmission path; and judging, on a reception side of the radio-transmitted data, the packet structure on the basis of the received overhead information, and conducting segmentation or assembly to restore an original packet structure.

According to this transmission method, data packetized so as to be transmitted via a wire transmission path is converted so as to have a frame structure for radio transmission, and the reception side of the radio-transmitted data restores the original packet structure.

A transmission device of a first invention includes a wire reception means for obtaining data packetized in a predetermined form so as to be transmitted via a wire transmission path; a data conversion means for conducting assembly or segmentation on the packetized data obtained by the wire reception means, thereby producing data having a data quantity of one unit for radio transmission, adding data concerning the assembly or segmentation of the packet structure to the data produced as a result of the assembly or segmentation as overhead information, and providing the data having the overhead information added thereto with a data structure for radio transmission; and a radio transmission means for conducting radio transmission of the data converted by the data conversion means via a predetermined radio transmission path.

According to the transmission device of the first invention, the packetized data received by the wire reception means is converted for radio transmission and transmitted from the radio transmission means. In addition, on the basis of the overhead information added to the transmission data, the reception side of the radio-transmitted data can restore the original packet structure.

A transmission device of a second invention includes a radio reception means for receiving data provided with a predetermined data structure and transmitted via a predetermined radio transmission path; a data conversion means for conducting segmentation or assembly on data received by the radio reception means on the basis of overhead information included in the received data and producing packetized data; and a wire transmission means for sending out the data packetized by the data conversion means to a wire transmission path.

According to the transmission device of the second invention, data received by the radio reception means is transmitted via the wire transmission path on the basis of the overhead information added thereto. Therefore, the packet structure is restored and resultant data is sent out to the wire transmission path.

The invention will be further described by way of example with reference to the accompanying drawings, in which:-
FIG. 1 is a block diagram showing a transmission configuration example according to an embodiment of the present invention;
FIG. 2 is a block diagram showing a configuration example of a radio transmission device according to an embodiment of the present invention;
FIG. 3 is an explanatory diagram for showing an example of processing on the reception side of isochronous transfer packets according to an embodiment of the present invention;
FIG. 4 is an explanatory diagram for showing an example or processing on the transmission side of isochronous transfer packets according to an embodiment of the present invention;
FIG. 5 is an explanatory diagram for showing an example of transmission configuration of isochronous transfer packets in a radio section according to an embodiment of the present invention;
FIG. 6 is an explanatory diagram for showing an example of processing of asynchronous transfer packets on the transmission side according to an embodiment of the present invention;
FIG. 7 is an explanatory diagram for showing an example of processing of asynchronous transfer packets on the reception side according to an embodiment of the present invention;
FIG. 8 is an explanatory diagram for showing an example of transmission configuration of asynchronous transfer packets in a radio section according to an embodiment of the present invention;
FIG. 9 is a flow chart showing an example of processing on the radio transmission source according to an embodiment of the present invention;
FIG. 10 is a flow chart showing an example of processing on the radio reception destination according to an embodiment of the present invention;
FIG. 11 is a timing diagram showing an example of retransmission processing via a radio transmission path according to an embodiment of the present invention;
FIG. 12 is an explanatory diagram for showing another example of processing of asynchronous transfer packets (where one packet is segmented and transmitted) on the transmission side according to an embodiment of the present invention;
FIG. 13 is an explanatory diagram for showing another example of processing of asynchronous transfer packets (where one packet is segmented and transmitted) on the reception side according to an embodiment of the present invention;
FIG. 14 is an explanatory diagram for showing another example of transmission configuration of asynchronous transfer packets (where one packet is segmented and transmitted) in a radio section according to an embodiment of the present invention; and
FIG. 15 is an explanatory diagram for showing still another example of transmission configuration of asynchronous transfer packets (where one packet is housed in one slot) in a radio section according to an embodiment of the present invention.

Hereafter, an embodiment of the present invention will be described with reference to the accompanying drawing.

In the present embodiment, the present invention has been applied to a data transmission system suitable for the case where a relatively small scale communication network is formed in, for example, an office, home or the like. The system is made capable of transmitting various data such as video data, audio data, computer data and so on. In this case, devices serving as a transmission source of these data (such as a video signal reproducing device and a personal computer device or the like) and devices serving as destination (such as a video signal recording device, a monitor device, a printer device or the like) have a connection terminal of a bus line (wire signal line) conforming to the IEEE 1394 interface form. From the connection terminal, various data can be sent out in a communication form conforming to the IEEE 1394 interface form. In addition, data supplied via the connection terminal can be received.

As data transmission by using this IEEE 1394 interface form, there are data transmission using the isochronous transfer (synchronous) transfer mode and data transmission using the asynchronous (non-synchronous) transfer mode. The isochronous transfer mode is such a transmission mode that a fixed data transmission quantity per unit time is secured. The isochronous transfer mode is also such a mode that basically retransmission processing is not conducted even if there is missing in data received at the destination. In the case where data of a relatively large capacity, such as video data, audio data and so on, need to be transferred in real time, the isochronous transfer mode is used. The asynchronous transfer mode is a mode for securely transmitting relatively short data. When there is missing in data received at the destination, control for retransmitting the data from the transmission source is effected in the asynchronous transfer mode. In the case of data, such as various program data and control data, for which certainty of transmission is more important than the nature of real time, the asynchronous transfer mode is used. Furthermore, in the IEEE 1394 interface form, high speed transmission having a data transfer rate equal to or more than 100 Mbits/sec is conducted.

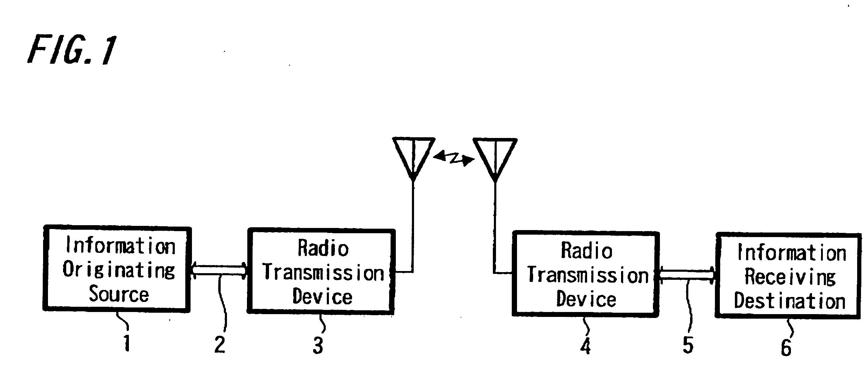

FIG. 1 is a block diagram showing the transmission configuration of the present embodiment. An information originating source 1 serving as a transmission source is connected to a radio transmission device 3 via a bus line 2 of the IEEE 1394 interface form. From the information originating source 1, various data are transmitted to the radio transmission device 3 via this bus line 2 in the IEEE 1394 interface form. The radio transmission device 3 can conduct radio transmission of data supplied via the bus line 2. in addition, the radio transmission device can receive a radio signal and transmit the receive data to the device side connected via the bus line 2.

Here, as a device for conducting radio communication with the radio transmission device 3, a radio transmission device 4 is prepared. The radio transmission device 4 supplies data obtained by receiving a radio signal to an information receiving destination 6 via a bus line 5 of the IEEE 1394 interface form. As for data transmission conducted between the radio transmission device 4 and the information receiving destination 6 via the bus line 5 as well, data transmission is conducted according to the IEEE 1394 interface form in the same way as the bus line 2. The radio transmission device 4 can also conduct radio transmission of data or the like obtained via the bus line 5.

Here, it is assumed for brevity of description that only one device is connected to the bus line 2 and only one device is connected to the bus line 5. In the case where each of the bus line 2 and the bus line 5 is actually a bus line forming a network, however, there is a possibility that a plurality of devices up to the number stipulated by the IEEE 1394 interface form are connected to the bus line. According to the IEEE 1394 interface form, the device of the originating source of transmitted data and the device of the receiving destination of the transmitted data are adapted to be indicated by an originating source ID and a receiving destination ID, respectively.

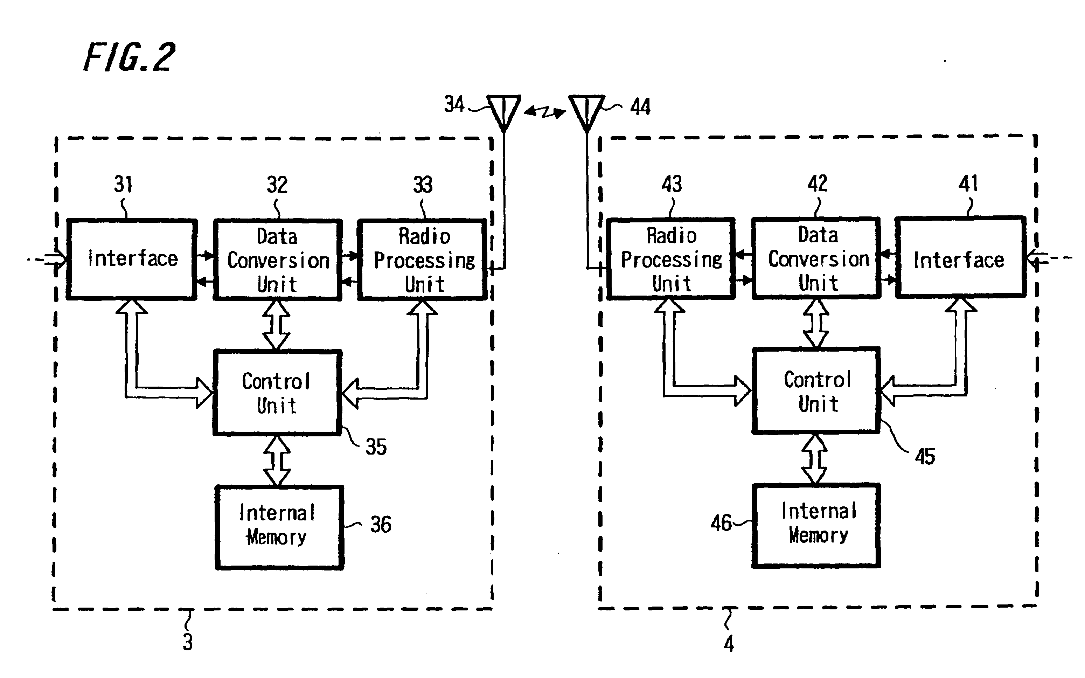

A configuration example of the radio transmission devices 3 and 4 is shown in FIG. 2. Here, the radio transmission devices 3 and 4 have basically the same configuration. In other words, an interface unit 31 of the radio transmission device 3 extracts data included in the transmission data obtained at an IEEE 1394 interface terminal of the device and required to be relayed by the radio transmission device 3, and supplies the extracted data to a data conversion unit 32.

In the data conversion unit 32, processing for converting data transmitted via the wire bus line to data having a form for radio transmission is conducted. Details of the conversion processing will be described later. Transmission data converted to the form for radio transmission by the data conversion unit 32 is supplied to a radio processing unit 33, and radio-transmitted from an antenna 34 used for both transmission and reception and connected to the radio processing unit 33. Furthermore, an antenna 34 for both transmission and reception and connected to the radio processing unit 33 receives a radio signal, and supplies the received data to the data conversion unit 32. The data conversion unit 32 conducts processing for converting the radio-transmitted data to data to be transmitted via the wire bus line. The conversion processing in this case will also be described later. The received data converted by the data conversion unit 32 is supplied to the interface unit 31, and sent out onto the wire bus line.

Each of the units in the radio transmission device has such a configuration as to execute the processing on the basis of control effected by a control unit 35 comprising a microcomputer and so on. If a signal received by the radio processing unit 33 is a control signal concerning the radio transmission, then the received control signal is supplied to the control unit 35 via the data conversion unit 32, and the control unit 35 is adapted to judge the control data. Furthermore, as for a control signal to be radio-transmitted from the control unit 35 to another transmission device as well, it is supplied from the control unit 35 to the radio processing unit 33 via the data conversion unit 32, and radio-transmitted. An internal memory 36 storing an operation program and the like required as a radio transmission device of a central control station and a terminal station is connected to the control unit 35. Furthermore, temporary storage of data required at the time of radio transmission processing is conducted by this internal memory 36. This internal memory 36 is adapted to conduct also temporary storage of data which is required at the time of conversion processing conducted in the data conversion unit 32.

The radio transmission device 4 also has completely the same configuration as that of the radio transmission device 3. In other words, an interface unit 41, a data conversion unit 42, a radio processing unit 43, a control unit 45, and an internal memory 46 of the radio transmission device 4 conducts the same processings as those of the interface unit 31, the data conversion unit 32, the radio processing unit 33, the control unit 35, and the internal memory 36 of the radio transmission device 3. As for radio transmission between the two radio transmission devices 3 and 4, one of the two radio transmission devices serves as a control station and the other of the two radio transmission devices serves as a terminal station which executes radio transmission on the basis of control effected by the control station, in some cases. Or in some cases, both the radio transmission devices 3 and 4 serve as terminal stations, and radio transmission is executed under the control from a different control station which is not illustrated.

If the data radio-transmitted by the radio processing unit 33 of the radio transmission device 3 is packet data of the isochronous transfer mode of the IEEE 1394 interface system, and it is necessary to conduct radio transmission of data of a large quantity while securing the nature of real time, then the control station is requested to secure as many slots as required in a frame which is set within a band prepared as a radio transmission path, and radio transmission is started when the slots have been secured. Furthermore, if data is packet data of the asynchronous transfer mode of the IEEE 1394 interface system, then the data quantity is typically less than that of packet data of the isochronous transfer mode, but certainty of data transmission is considered to be more important than the nature of real time. When such timing that packet data can be transmitted between the two radio transmission devices 3 and 4 is attained, the packet data are radio-transmitted successively one packet by one packet. An answer signal is returned and retransmission control is conducted.

The radio transmission between the two radio transmission devices 3 and 4 is adapted to conduct the data transmission at high speed in order that data of the relatively high transmission rate transmitted by the IEEE 1394 interface can be transmitted as it is. For example, a relatively high frequency band of the order of several GHz is used as a radio transmission band. By using the prepared transmission band, radio transmission of a multi-carrier signal referred to as OFDM (Orthogonal Frequency Division Multiplex) is conducted.

Processing conducted when transmitting data from the information originating source 1 to the information receiving destination 6 via the radio transmission devices 3 and 4 of the present embodiment will now be described. First of all, transmission processing of data sent out from the information originating source 1 in the isochronous transfer mode will now be described. As for sending out data from the information originating source 1 to the bus line 2 in the isochronous transfer mode, data are sent out successively as data packetized at every predetermined data length. In the isochronous transfer mode in this case, a maximum time interval of each packet sending out is set beforehand. In such a state that the transmission band of the data is secured beforehand, data transfer is conducted in the isochronous transfer mode. The nature of real time of data transmitted in the isochronous transfer mode is secured. The data thus sent out to the bus line 2 and supplied to the radio transmission device 3 is converted to a radio signal by the radio transmission device 3 and radio-transmitted.

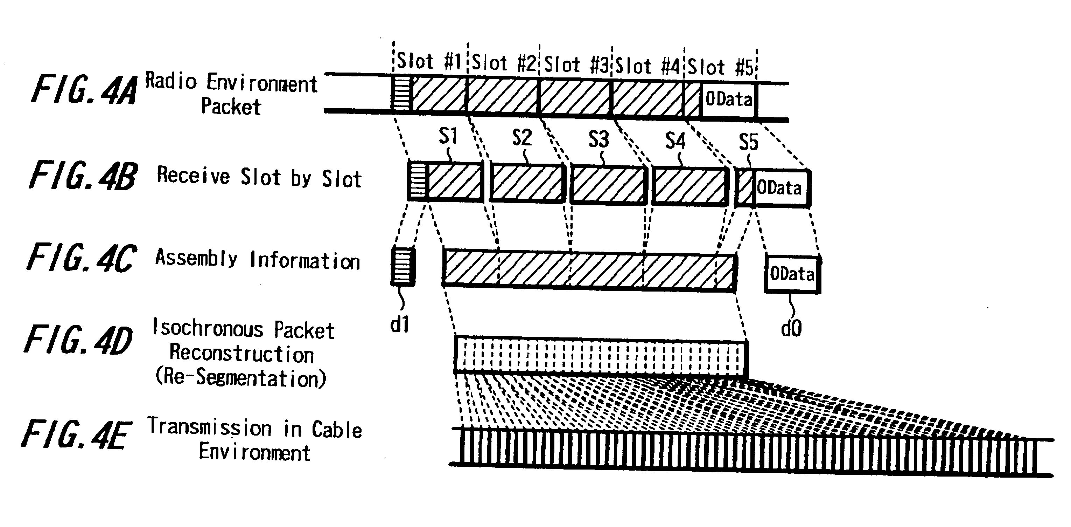

FIG. 4 is a diagram showing a conversion processing example for radio-transmitting data of the isochronous transfer mode conducted in the radio transmission device 3. First of all, as shown in FIG. 4A, packets of the isochronous transfer mode are periodically supplied to the radio transmission device 3 via the bus line 2. The periodically supplied packets are subjected in the data conversion unit 32 to processing for extracting packet portions and assembling the packet portions at every predetermined length. This assembling is executed on the basis of control effected by the control unit 35. The assembled data is temporarily stored in the memory 36 connected to the control unit 35. Here, all of packetized and transmitted data are used to conduct the assembling.

And data indicating this assembly state is generated by the control unit 35. As shown in FIG. 4C, this assembly data d1 is added to a head portion of a packet assembled as overhead information. Furthermore, the control unit 35 judges the length of data formed of the assembly data dl and the assembled packet. The control unit 35 inserts invalid data dO having consecutive 0's (hereafter such data are referred to as 0 data) to an end of a section left over in a data quantity equivalent to integer times of slot length for radio transmission. By the way, data such as the length of the 0 data, its disposition position and so on, may be added to the assembly data d1.

As shown in FIG. 4D, processing for segmenting the packet data assembled so as to include the assembly data dl of the head portion and the 0 data dO located at the end into one slot length for radio transmission to yield slot unit data S1, S2, ..., S5 is executed under the control effected by the control unit 35. A signal transmitted by the radio transmission device 3 is formed by arranging a predetermined number of slots in one frame. For example, according to the quantity of data to be transmitted, the number of slots to be used in one frame for radio transmission is assigned. As shown in FIG. 4E, single slots segmented from the data are successively supplied from the data conversion unit 32 to the radio processing unit 33 slot by slot when a radio transmission path is secured, and subjected to radio transmission in order slot by slot. In the example shown in FIG. 4E, data of one unit is segmented into five slots and transmitted, and the assembly data dl is transmitted at a head portion of a first slot #1 whereas the 0 data d0 is transmitted at an end of a last slot #5.

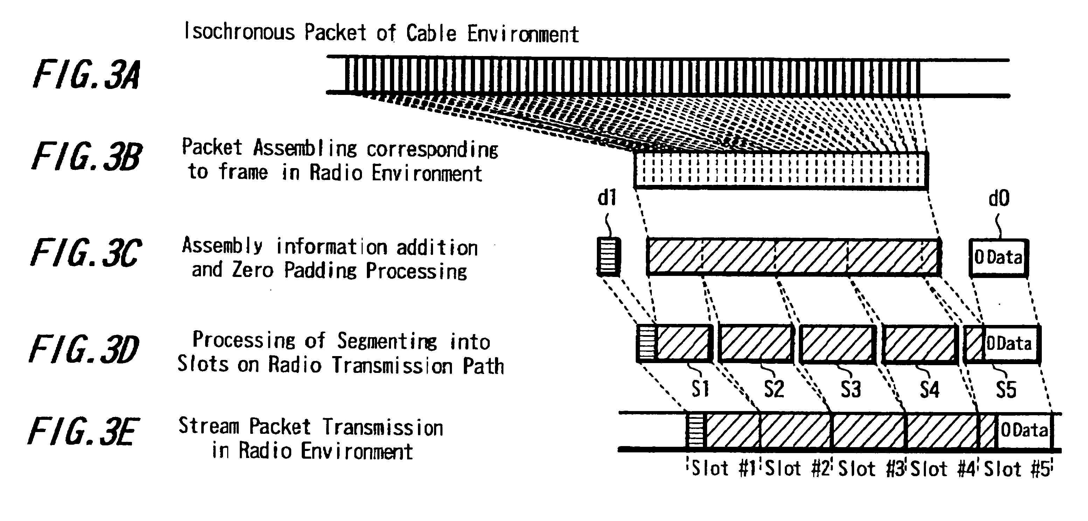

The signal subjected to radio transmission in such a configuration is received by the radio transmission device 4. FIG. 3 is a diagram showing conversion processing conducted when a radio transmission signal of the isochronous transfer mode is received by the radio transmission device 4 and sent out toward the bus line 5 side. First of all, a signal radio-transmitted as consecutive slots #1 to #5 as shown in FIG. 3A is subjected in the radio processing unit 43 to reception processing slot by slot as shown in FIG. 3B to yield reception data S1 to S5 having a slot as the unit. The reception data S1 to S5 having a slot as the unit are supplied to the data conversion unit 42. As shown in FIG. 3C, the data conversion unit 42 extracts the assembly data d1 serving as the overhead information added to the head portion of the supplied data, and supplies the assembly data dl to the control unit 45. Furthermore, the data conversion unit 42 removes the 0 data dO added to the end.

The control unit 45 judges the content of the assembly data d1, and conducts processing for reconstructing (i.e., re-segmenting) the data following the assembly data dl into packets for isochronous transfer mode as shown in FIG. 3D. As shown in FIG. 3E, the control unit sends out the reconstructed packets onto the bus line 5 packet by packet at a period stipulated for the isochronous transfer mode, and supplies the packets to the information receiving destination 6 as packet data of the IEEE 1394 interface form.

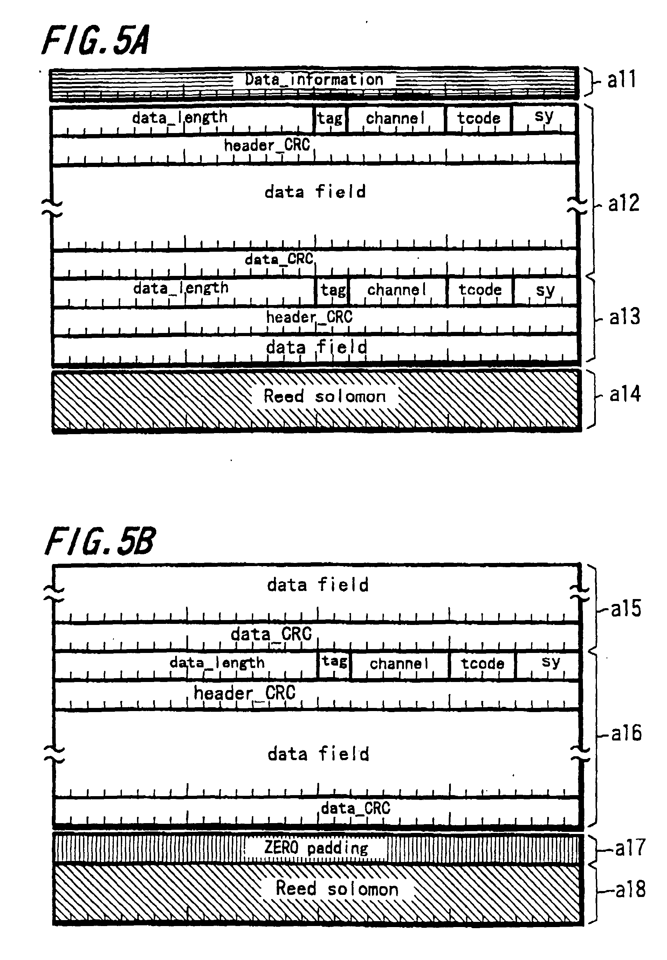

An example of slot configuration used when data of the isochronous transfer mode are subjected to radio transmission is shown in FIG. 5. FIG. 5A shows the configuration of a head slot, whereas FIG. 5B shows the configuration of an end slot.

As for the configuration of the head slot, header information a11 (a portion denoted as Data information) corresponding to the assembly data is disposed as shown in FIG. 5A. In succession, one packet data a12 is disposed. Furthermore, former half data a13 of the next packet is disposed in the remaining section. In the last portion, an error correcting code a14 (a portion denoted as Reed solomon) added to this slot for radio transmission is disposed. This error correcting code a14 is an error correcting code generated for data of a11 to a13, and generated in the radio transmission device 3 of the transmission side.

Hereafter, data of respective packets are disposed in slots in order. At the end of each slot, an error correcting code of the disposed data is added. In the last slot, data al5 and a16 of respective packets are disposed in order as shown in FIG. 5B. After the data a16, 0 data a17 (a portion denoted as ZERO padding) is disposed. In the last portion, an error correcting code a18 is disposed.

As for the data configuration of respective packets (data a12 to a16 of FIG. 5), packet data for the isochronous transfer mode of the IEEE 1394 interface form transmitted via the bus line are disposed as they are. To be concrete, data of a data length (data length), a tag indicating the isochronous transfer mode (tag), isochronous channel (channel), a transaction code (tcode), a synchronization code (sy), a header CRC (header CRC), a data block payload which is actually transmitted data (data field), a data CRC (data CRC) are disposed in order. Furthermore, when radio-transmitting a packet of the isochronous transfer mode between the radio transmission devices 3 and 4, retransmission processing of data is not conducted irrespective of the receiving state on the reception side.

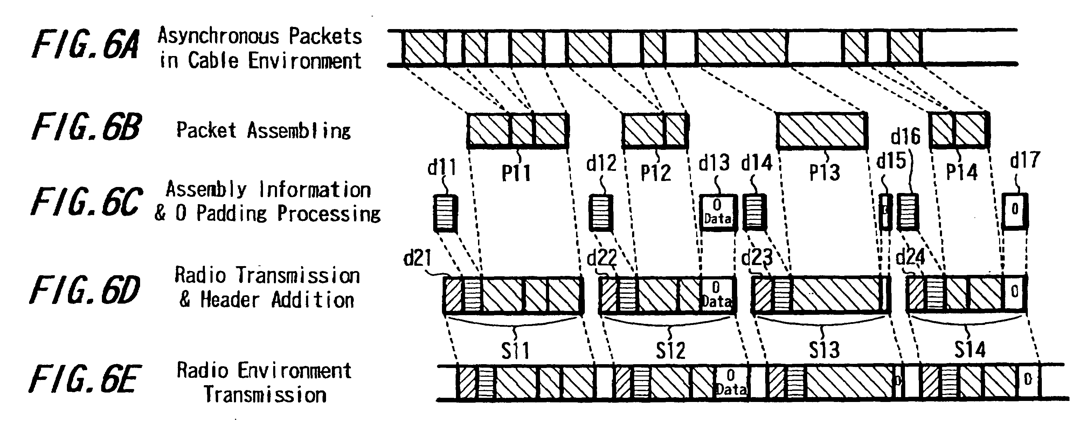

Processing of the case where data is transmitted from the information originating source 1 to the information receiving destination 6 via the radio transmission devices 3 and 4 of the present embodiment in the asynchronous transfer mode will now be described. Transmission of data from the information originating source 1 to the bus line 2 in the asynchronous transfer mode is conducted as a packet having an arbitrary data length at any time when data to be transmitted has occurred (However, a maximum data quantity of one packet is predetermined). For example, packets having different lengths are sent out discontinuously as shown in FIG. 6A. When the packet data is supplied to the radio transmission device 3 via the bus line 2, the data conversion unit 32 of the radio transmission device 3 assembles every data which can be accommodated by a single packet for radio transmission into a packet as shown in FIG. 6B. By the way, a single packet in the case where radio transmission is conducted in the asynchronous transfer mode is set so as to have a data quantity less than that of a single slot in the case where radio transmission is conducted in the isochronous transfer mode. This assembling processing is executed under the control effected by the control unit 35. Assembled data is temporarily stored in the memory 36, and stored until an answer signal is obtained from the reception side. In an example shown in FIG. 6B, data p11, p12, p13 and p14 assembled into four packets are obtained.

In the case of the asynchronous transfer mode, assembly data is added to data of every slot as overhead information as shown in FIG. 6C. In addition, 0 data is disposed in the remaining section of each packet. The assembly data is data concerning the state of the assembled packet, and it is generated by the control unit 35. In an example shown in FIG. 6C, assembly data d11 is added to data p11, and assembly data d12 and 0 data d13 are added to data p12. Assembly data d14 and 0 data d15 are added to data p13, and assembly data d16 and 0 data d17 are added to data p14.

Furthermore, in the case of the asynchronous transfer mode, header information for radio transmission is added to a head portion of each assembled data as shown in FIG. 6D. The header information for radio transmission is data required when data packetized in the asynchronous transfer mode is to be subjected to radio transmission. In the example shown in FIG. 6D, header information d21, d22, d23 and d24 for radio transmission are disposed in head portions of respective assembled data. As shown in FIG. 6D, data including the header information are temporarily stored in the memory 36 as data S11, S12, S13 and S14 for radio transmission each having a packet unit. At the time when a radio transmission path has been secured, data is read out from the memory 36 slot by slot, and supplied from the data conversion unit 32 to the radio processing unit 33. As shown in FIG. 6E, radio transmission of data is conducted packet by packet.

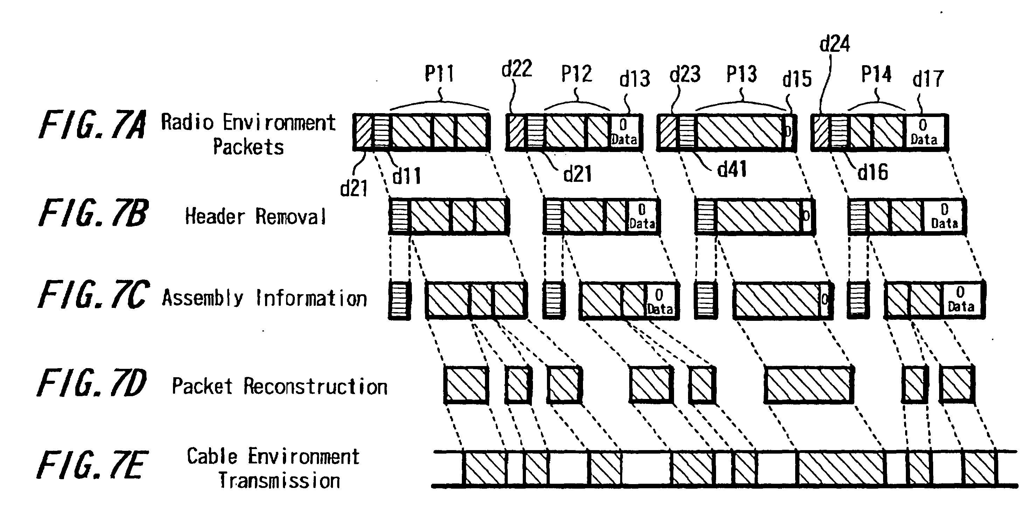

The signal radio-transmitted in the asynchronous mode is also received by the radio transmission device 4. FIG. 7 is a diagram showing conversion processing conducted in the case where the radio transmission signal of the synchronous transfer mode is received by the radio transmission device 4 and sent out to the bus line 5 side. First of all, received packets directed to the radio transmission device is subjected to reception processing in the radio processing unit 43 of the radio transmission device 4 as shown in FIG. 7A. Each of the received packets is supplied to the data conversion unit 42. The header information d21, d22, d23 and d24 for radio transmission added to respective packets are separated. The separated header information is supplied to the control unit 45. Furthermore, as shown in FIG. 7B, the assembly data d11, d12, d14 and d16, and 0 data d13, d15 and d17 added to the respective packets are removed. Here, the control unit 45 judges the contents of the assembly data, and makes the data conversion unit 42 execute packet reconstruction on the data p11, p12, p13 and p14 following the assembly data for transmission on the wire bus line as shown in FIG. 7D.

When it has become possible to send out respective packets onto the bus line, the reconstructed packets are sent out to the bus line 5 packet by packet, as packet data of the asynchronous transfer mode as shown in FIG. 7E, and supplied to the information receiving destination 6 as packet data for the asynchronous transfer mode of the IEEE 1394 interface form.

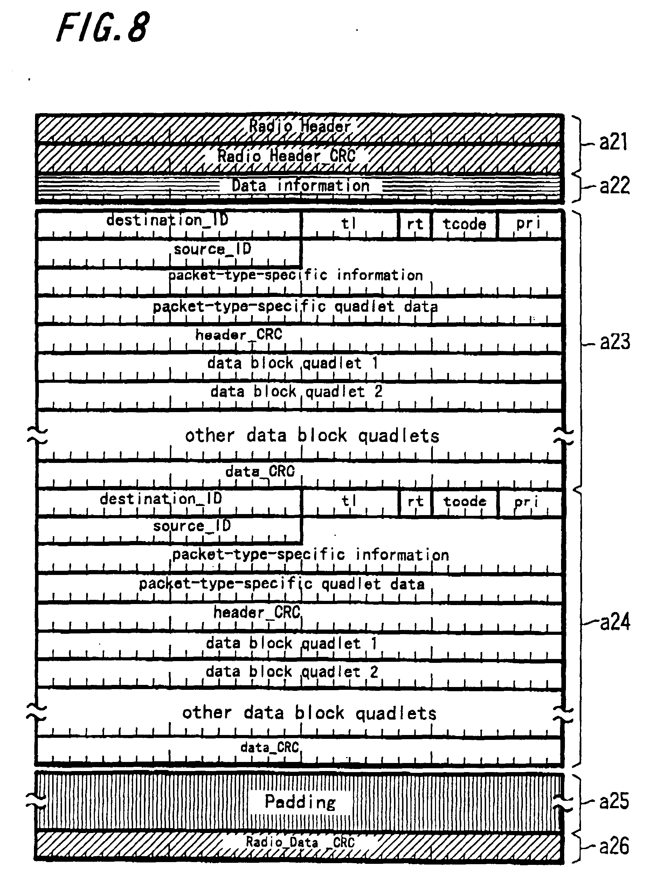

An example of packet configuration used when data of the asynchronous transfer mode are subjected to radio transmission is shown in FIG. 8. FIG. 8 shows the configuration of one packet. Here, two packets for the asynchronous transfer mode on the bus line are housed in one packet for radio transmission.

First of all, as shown in FIG. 8, header information for radio transmission (a portion denoted as Radio Header) and an error detecting code for the header information (a portion denoted as Radio Header CRC) are disposed as data a21 of a head portion of each packet. In the following section, assembly data a22 (a portion denoted as Data information) is disposed. In succession, data a23 of a packet for wire transmission is disposed. Furthermore, the next data a24 of a packet for wire transmission is disposed. In the wake of the data a24, 0 data a25 (a portion denoted as Padding) is disposed. In the last portion, an error detecting code a26 (a portion denoted as Radio Data CRC) added for radio transmission is disposed. This error detecting code a26 is an error detecting code generated for data of a23, a24 and a25, and generated in the radio transmission device 3 of the transmission side.

As for the data configuration of respective packets for wire transmission (data a23 and a24 of FIG. 8), packet data for the asynchronous transfer mode of the IEEE 1394 interface form transmitted via the bus line are disposed as they are. To be concrete, a data destination ID (destination ID), a transaction label (t1), a code indicating retransmission status (rt), a packet classification code (tcode), a priority (pri), an originating source ID (source ID), packet form guide data (packet type specific information, packet type specific quadlet data), a header CRC (header CRC), a sequence of data blocks which are actually transmitted data (data block quadlet 1, data block quadlet 2, ... ), and a CRC for transmission data (data CRC) are disposed in order.

Packets of the asynchronous transfer mode each having such a configuration are radio-transmitted between the radio transmission devices 3 and 4. When the radio signal receiving side has received data correctly, it transmits an answer signal indicating that data has been received correctly to the radio transmission source. When there is a packet the answer signal of which cannot be confirmed by the transmission source, retransmission processing of the packet is executed.

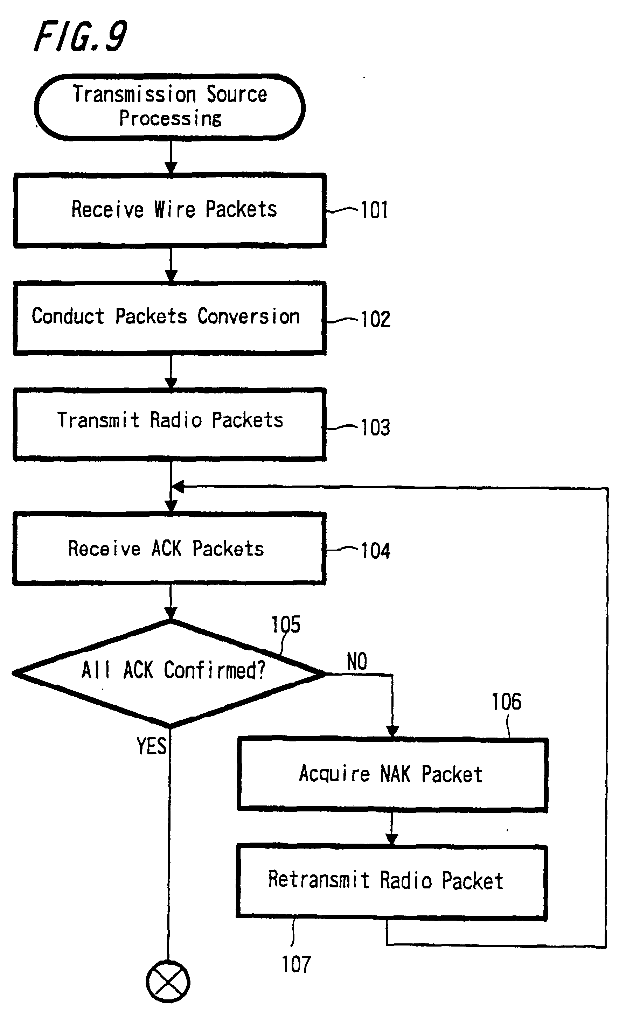

Retransmission processing of this radio transmission will now be described. First of a11, processing of a flow chart shown in FIG. 9 is conducted in the radio transmission device 3 which is the radio transmission source. In the radio transmission device 3, packets transmitted via the wire bus line are received by the interface unit 31 (step 101). Under the control by the control unit 35, the data conversion unit 32 converts data to the packet configuration as shown in FIG. 8 (step 102). A converted radio signal is transmitted from the radio processing unit 33 (step 103).

After transmission of the packet data has been conducted, processing of receiving the answer signal ACK from the transmission destination is conducted (step 104). It is determined whether the answer signal ACK has been received for all packets in the reception processing (step 105). In the case where the answer signal ACK has been received for all packets, the retransmission processing is not conducted.

If the answer signal ACK cannot be received for all packets at the step 105, data of the packet the answer signal of which cannot be confirmed is read out from the internal memory 36 of the radio transmission device 3 and acquired again (step 106). This packet data is transmitted from the radio processing unit 33 again (step 107).

After this radio retransmission, the processing returns to the step 104 and processing of receiving the answer signal ACK for the retransmitted signal is conducted. If the retransmitted signal has been correctly received on the destination side, then the answer signal ACK is confirmed at the step 105 and the retransmission processing is finished. If the answer signal ACK cannot be confirmed, transmission of the pertinent packet is repetitively conducted until the answer signal ACK can be confirmed.

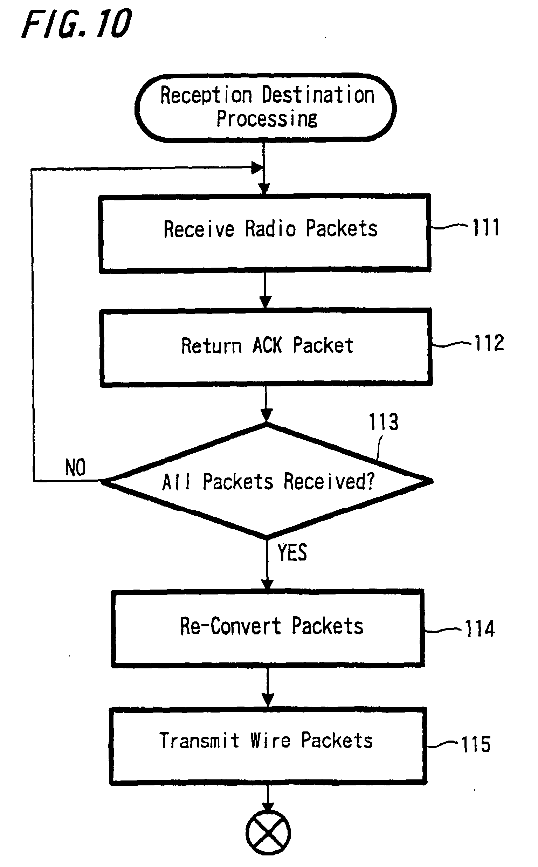

Processing conducted on the radio signal receiving side, i.e., in the radio transmission device 4 is shown in a flow chart of FIG. 10. If the radio transmission device 4 has correctly received packet data contained in a radio signal received by the radio processing unit 43 (step 111), radio transmission processing of the answer signal ACK for the packet data is conducted (step 112). It is determined whether or not all transmitted packets have been received (step 113). If there is a packet which has not been received, the processing returns to the step 111. If data of all packets have been obtained, reconversion processing of the packets is conducted in the data conversion unit 42 (step 114). Then, the re-converted packets are sent out to the bus line 5 (step 115).

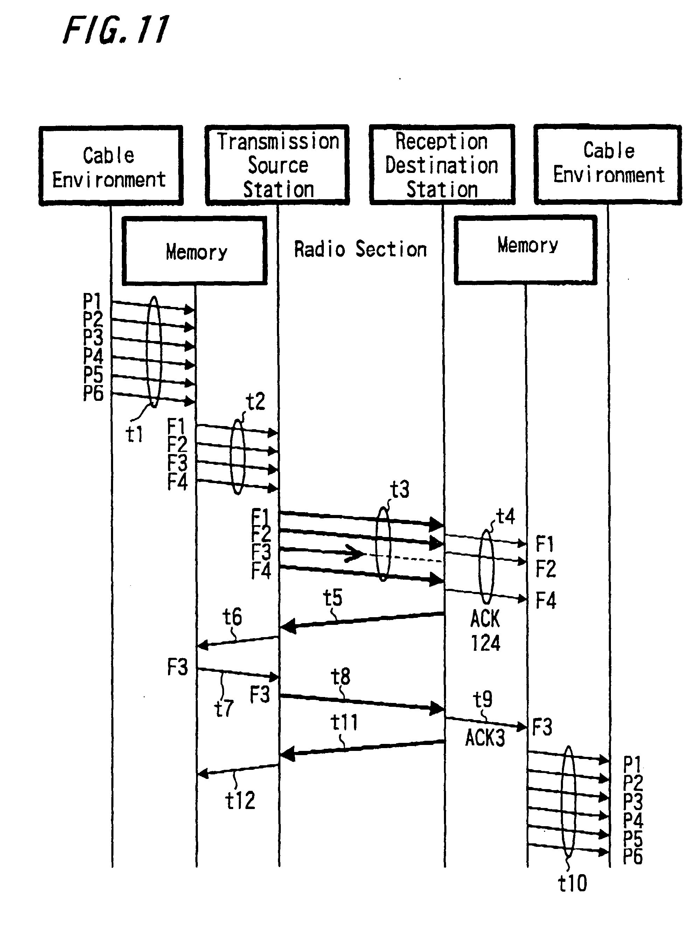

Such a state that retransmission is conducted when effecting radio transmission on the basis of the flow charts of FIGS. 9 and 10 will now be described by referring to a timing diagram of FIG. 11. It is now assumed that packets P1, P2, P3, P4, P5 and P6 of the asynchronous transfer mode have been transmitted to a radio transmission source station at time tl in a cable environment of a wire bus line. At this time, the packet data P1 to P6 are temporarily stored in the memory of a transmission device forming this transmission source station, and converted to packet data F1, F2, F3 and F4 for radio transmission. When a radio transmission path has been secured (at time t2), the packet data F1 to F4 obtained by the conversion are read out from the memory, radio-transmitted from the transmission source station at time t3, and received by a reception destination station.

It is now assumed that the radio-transmitted packet F3 cannot be received correctly by the reception destination station at this time. Other packets F1, F2 and F4 received correctly are temporarily stored in a memory of a transmission device forming the reception destination station (at time t4). In addition, an answer signal ACK of the correctly received packets F1, F2 and F4 is radio-transmitted to the transmission source station at time t5. Upon receiving the answer signal ACK, the transmission source station effects such control as to read out stored data of the packet F3 for which an answer signal ACK is not obtained, from the memory (at time t6). Data of the packet F3 read out on the basis of this control at time t7 is radio-transmitted again (at time t8).

If the retransmitted data of the packet F3 has been received correctly by the reception destination station, the received data is temporarily stored in the memory (at time t9). The reception destination station judges that all packets have been obtained, conducts reconstruction on the packet data to obtain packet data for the cable environment, and sends out packet data P1, P2, P3, P4, P5 and P6 obtained by the reconstruction to a wire bus line which is the cable environment (at time t10). Furthermore, the reception destination station radio-transmits an answer signal ACK for the packet F3 correctly received at the time t9 to the transmission source station at time t11. Upon receiving the answer signal ACK, the transmission destination station erases the packet data stored in the memory, at time t12.

Whenever data of each packet is radio-transmitted in this manner, transmission processing of the answer signal is thus conducted. As a result, data disappearance in the radio transmission section does not occur. Even in the case where a wire transmission path and a radio transmission path are mixedly present, data can be correctly transmitted to the destination side in the asynchronous transfer mode.

In the radio transmission processing of data in the asynchronous transfer mode heretofore described, data of a plurality of packets transmitted via the wire transmission path are disposed in a single packet for radio transmission. Alternatively, data of a single packet of the asynchronous transfer mode transmitted via the wire transmission path may be segmented into a plurality of packets for radio transmission and radio-transmitted. In this case, the reception side of the radio signal may conduct reconstruction to obtain the data of the original packet.

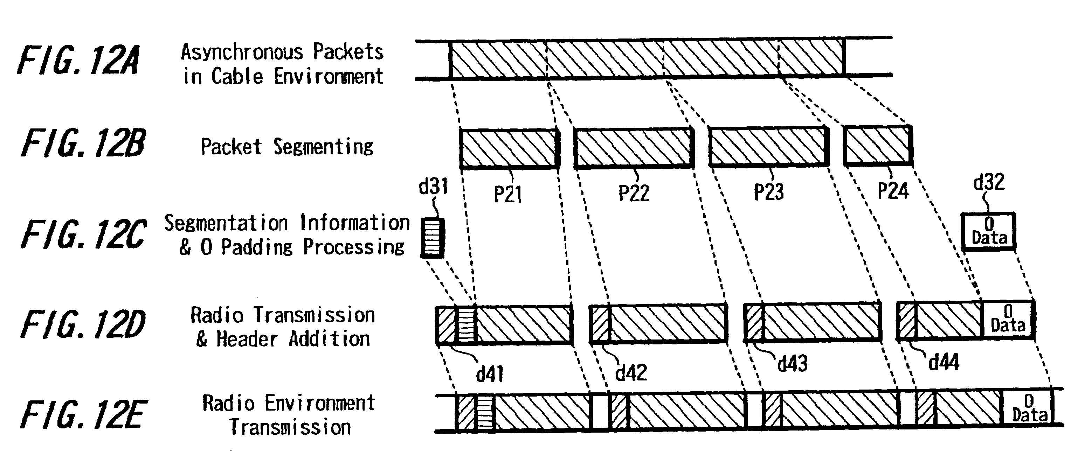

FIG. 12 shows an example of processing conducted in the radio transmission source in this case. At first, when packet data of the asynchronous transfer mode transmitted in the cable environment has a data quantity larger than the packet length of one unit for radio transmission in the asynchronous transfer mode as shown in FIG. 12A, the packet is segmented into data lengths each having one unit for radio transmission as shown in FIG. 12B. Here, the packet is segmented into four packets p21, p22, p23 and p24.

As shown in FIG. 12C, segmentation data d31 for indicating the segmentation state of the four packets p21 to p24 is generated, and the segmentation data d31 is added to a head portion of the first packet p21. In addition, 0 data d32 having a length equivalent to the length of a remaining section in the packet length of the packet for radio transmission is prepared. Furthermore, as shown in FIG. 12D, header information pieces for radio transmission d41, d42, d43 and d44 are prepared for respective packets. The header information pieces d41 to d44 are added to head portions of respective packets p21 to p24 for radio transmission. The 0 data d32 is added to the tail packet p24. Four radio transmission packets thus obtained are radio-transmitted in order as shown in FIG. 12E.

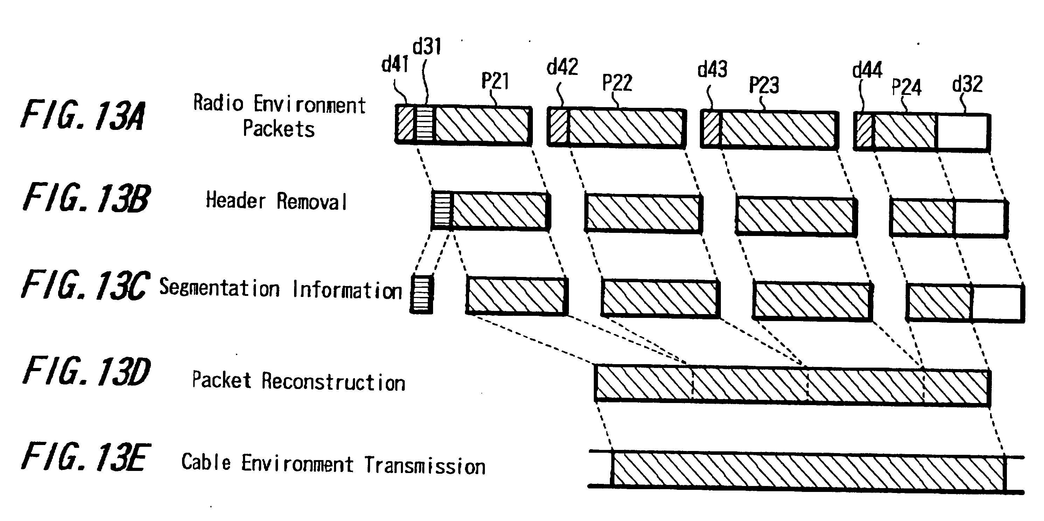

FIG. 13 shows an example of processing conducted on the segmented and radio-transmitted data in the reception destination. It is now assumed that a radio signal is received and four consecutive packets are obtained as shown in FIG. 13A. At this time, as shown in FIG. 13B, processing of removing the header information for radio transmission added to the head portion of each packet is conducted. Subsequently, the segmentation data d31 added to the first packet in the wake of the header information is extracted as shown in FIG. 13C. As shown in FIG. 13D, reconstruction is conducted on the transmitted data packets on the basis of the segmentation data d31 to produce one packet. The one packet obtained by the reconstruction is sent out to the connected bus line as shown in FIG. 13E.

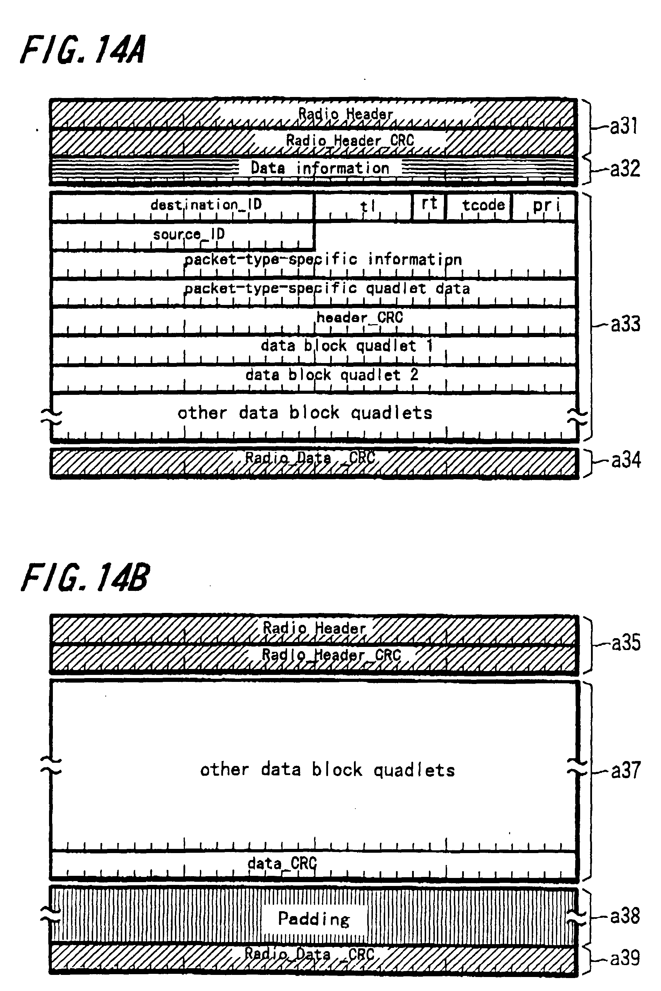

FIG. 14 shows an example of a packet structure obtained in the case where a packet of the asynchronous transfer mode transmitted through the cable transmission environment is segmented into a plurality of packets for radio transmission as shown in FIG. 12 and FIG. 13.

FIG. 14A shows the structure of the first radio transmission packet. As data a31 of a head portion of a first radio transmission packet, header information for radio transmission (a portion denoted as Radio Header) and an error detecting code for the header information (a portion denoted as Radio Header CRC) are disposed. In the following section, segmentation data a32 (a portion denoted as Data information) is disposed. In succession, data a33 of a wire transmission packet is disposed. In the last portion, an error detecting code a34 (a portion denoted as Radio Data CRC) added for radio transmission is disposed. This error detecting code a34 is an error detecting code generated for data of a32 and a33, and is generated in the radio transmission device of the transmission side.

Then, from the next radio transmission packet, the segmentation data a32 is omitted. The last packet has a configuration shown in FIG. 14B. In other words, as data a35 of a head portion of the last packet, header information for radio transmission (a portion denoted as Radio Header) and an error correcting code for header information (a portion denoted as Radio Header CRC) are disposed. In succession, continuation data a37 of the wire transmission packet is disposed. In the wake of the data a37, 0 data a38 (a portion denoted as Padding) is disposed. In the last portion, an error detecting code a39 (a portion denoted as Radio Data CRC) added for radio transmission is disposed. This error detecting code a39 is an error detecting code generated for data of a37 and a38, and is generated in the radio transmission device of the transmission side.

As for the configuration of data of each packet (such as data a33 of FIG. 14A) for wire transmission, the packet data for the asynchronous transfer mode of the IEEE 1394 interface form transmitted via the bus line is disposed as it is.

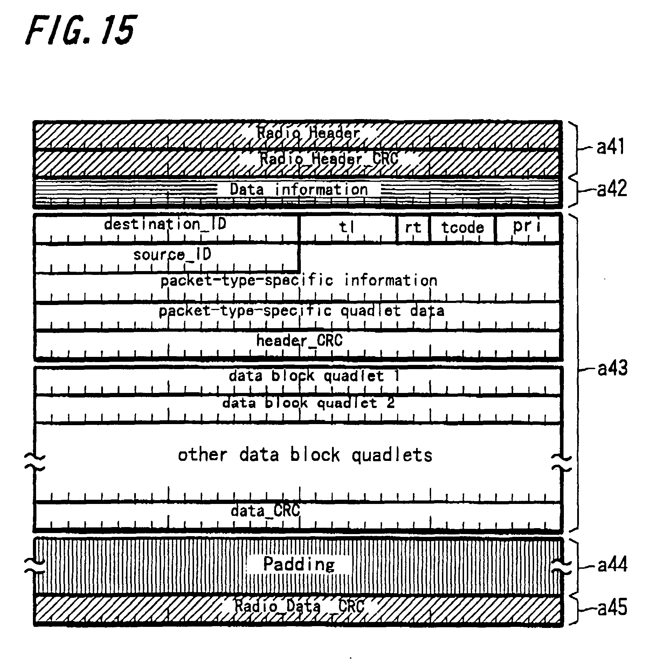

In the examples heretofore described, packet data of the asynchronous transfer mode transmitted via the wire transmission path is subjected to assembling or segmentation for radio transmission. Alternatively, data of one packet of the asynchronous transfer mode transmitted via the wire transmission path may be transmitted by using one packet of the radio transmission path. FIG. 15 shows the structure of one packet radio-transmitted in this case. As data a41 of a head portion of each packet, header information for radio transmission (a portion denoted as Radio Header) and an error detecting code for the header information (a portion denoted as Radio Header CRC) are disposed. In the following section, data a42 concerning the packet structure in the wire transmission path (a portion denoted as Data information) is disposed. In succession, data a43 of a wire transmission packet is disposed. After the data a43, 0 data a44 (a portion denoted as Padding) is added, if necessary. In the last portion, an error detecting code a45 (a portion denoted as Radio Data CRC) added for radio transmission is disposed. This error detecting code a45 is an error detecting code generated for data of a42, a43 and a44, and is generated in the radio transmission device of the transmission side.

By carrying out the transmission processing described in the present embodiment, conversion to data for the frame structure of the radio environment which is different from the transmission frame of the wire cable environment such as the IEEE 1394 interface form is conducted. Application to communication using any radio section becomes possible.

Especially, overhead information peculiar to the radio section is added to a packet transmitted in the cable environment. Even if a transmission error occurs in the radio section, therefore, the packet does not disappear and control such as retransmission control or the like can be easily conducted by referring to the overhead information in the radio section. Without utilizing the processing of the packet retransmission procedure conducted by a high rank application, therefore, it becomes possible to conduct retransmission control peculiar to the radio section.

Furthermore, processing of adding overhead information peculiar to the radio section to data of each unit and transmitting resultant data is applied to only transmission of the asynchronous transfer mode having a short packet size. At the time of isochronous transfer mode used for transmission of large amount of data such as video data, audio data and the like, a transmission band is secured beforehand, and only minimum information is added and transmitted. By the virtue of such a configuration, radio data transmission in two modes, i.e., the isochronous mode and the asynchronous mode prepared in the IEEE 1394 interface form and the like can be effected efficiently.

In the data structure of packets or slots for radio transmission described in the embodiment, 0 data which is invalid data is added to the tail. However, this 0 data may be added only in the case where the pertinent section remains. If no section remains when slots for wire transmission are disposed in packets or slots for radio transmission, the 0 data need not be disposed.

Examples of data structures described in the embodiment are merely exemplified. The data structure is not limited to the illustrated slot structure or packet structure. Especially, in the above described example, processing of the case where data of the IEEE 1394 interface form is radio-transmitted has been described. However, the present invention can be applied to the case where data to be transmitted via a wire transmission path according to a different interface form is radio-transmitted.

According to the transmission method according to claim 1, data packetized so as to be transmitted via a wire transmission path is converted so as to have a data structure for radio transmission, and the reception side of the radio-transmitted data restores the original packet structure. Radio transmission of data packetized for transmission via the wire transmission path can be conducted efficiently.

According to the transmission method of claim 2, in the invention of claim 1, when the data quantity obtained as a result of conducting assembly or segmentation and thereby producing data having a data quantity which can be transmitted as data of one unit is less than the data quantity of one unit, invalid data is disposed in the remaining section. As a result, the reception side of the radio-transmitted data can simply extract only valid data.

According to the transmission method of claim 3, in the invention of claim 1, besides the overhead information, header information for radio transmission is added to data at every predetermined unit, and then radio transmission is conducted. As a result, discrimination between the processing for radio transmission control and the processing concerning the original packetized data becomes reliable.

According to the transmission method of claim 4, in the invention of claim 1, the reception side of the radio-transmitted data returns answer data for correctly received data to the transmission side of the radio transmission path, and the transmission side retransmits data for which the answer data is not obtained. Even in the case where data transmission is conducted via a radio transmission path, therefore, accurate transmission without occurrence of data missing becomes possible.

According to the transmission method of claim 5, in the invention of claim 1, as for the data subjected to isochronous transfer via the wire transmission path, a radio transmission path is secured beforehand, then overhead information is added to every predetermined unit of the data, and resultant data is radio-transmitted, whereas as for data subjected to asynchronous transfer via the wire transmission path, overhead information is added to every unit of the data and radio-transmitted, the unit being shorter than the unit for the data subjected to isochronous transfer. As a result, radio transmission of both the data subjected to isochronous transfer and the data subjected to asynchronous transfer in respective optimum states becomes possible.

According to the transmission device of claim 6, the packetized data received by the wire reception means is transmitted from the radio transmission means as data packetized for radio transmission. In addition, on the basis of the overhead information added to the data of the data structure, the reception side of the radio-transmitted data can restore the original packet structure. Even if there is a radio transmission path in the middle of the transmission path, efficient transmission making the most of the transmission format of the radio transmission path becomes possible.

According to the transmission device of claim 7, in the invention of claim 6, when the data quantity obtained as a result of the assembly or segmentation so as to produce data of one unit is less than the data quantity of one unit, the data conversion means disposes invalid data in the remaining section. As a result, the reception side of the radio-transmitted data can easily extract only valid data.

According to the transmission device of claim 8, in the invention of claim 6, the data conversion means adds header information for radio transmission, besides the overhead information, and conducts data conversion. As a result, information for radio transmission control is discriminated from information concerning the original packetized data. As a result, favorable transmission is conducted.

According to the transmission device of claim 9, in the invention of claim 6, upon a request from the destination party of the radio communication, the radio transmission means retransmits the data temporarily stored in the storage means. As a result, reliable data transmission becomes possible using a radio transmission path.

According to the transmission device of claim 10, in the invention of claim 6, the addition unit of the overhead information and so on are changed depending on whether data is data subjected to isochronous transfer via a wire transmission path or data subjected to asynchronous transfer via a wire transmission path. As a result, data transmitted by respective systems can be transmitted by suitable processing for respective systems.

According to the transmission device of claim 11, data received by the radio reception means is transmitted via the wire transmission path on the basis of the overhead information added thereto. Therefore, the packet structure is restored and resultant data is sent out to the wire transmission path. The radio-transmitted data can be converted to data for wire transmission efficiently.

According to the transmission device of claim 12, the device of the invention of claim 11 includes a radio transmission means for transmitting answer data to the transmission source when data can be received correctly by the radio reception means. As a result, reliable data transmission becomes possible in radio transmission.

Having described preferred embodiments of the present invention with reference to the accompanying drawings, it is to be understood that the present invention is not limited to the above-mentioned embodiments and that various changes and modifications can be effected therein by one skilled in the art without departing from the spirit or scope of the present invention as defined in the appended claims.

## Claims

1. A transmission method comprising the steps of:
conducting assembly or segmentation on data packetized in a predetermined form so as to be transmitted via a wire transmission path, and thereby producing data having a data quantity which can be transmitted as data of one unit for radio transmission;
adding data concerning the assembly or segmentation of the packet structure to data produced as a result of the assembly or segmentation as overhead information;
providing the data having the overhead information added thereto with a data structure for radio transmission;
conducting radio transmission of the data provided with the data structure for radio transmission via a predetermined radio transmission path; and
judging, on a reception side of the radio-transmitted data, the packet structure on the basis of the received overhead information, and conducting segmentation or assembly to restore an original packet structure.

2. A transmission method according to claim 1, wherein when the data quantity obtained as a result of the step of conducting assembly or segmentation and thereby producing data having a data quantity which can be transmitted as data of one unit is less than the data quantity which can be transmitted by data of one unit, invalid data is disposed in the remaining section to produce the data structure for data transmission.

3. A transmission method according to claim 1 or 2, wherein besides the overhead information, header information for radio transmission is added to produce the data structure for data transmission, and then radio transmission is conducted.

4. A transmission method according to claim 1, 2 or 3 wherein the reception side of the radio-transmitted data returns answer data for correctly received data to the transmission side of the radio transmission path, and the transmission side again retransmits data for which the answer data is not obtained.

5. A transmission method according to claim 1, 2, 3 or 4 wherein as for data subjected to isochronous transfer via the wire transmission path, a radio transmission path is secured, then overhead information is added to every predetermined unit of the data, and resultant data is radio-transmitted,
as for data subjected to asynchronous transfer via the wire transmission path, overhead information is added to every unit of the data, the unit being shorter than the unit for the data subjected to isochronous transfer.

6. A transmission device comprising:
a wire reception means for obtaining data packetized in a predetermined form so as to be transmitted via a wire transmission path;
a data conversion means for conducting assembly or segmentation on the packetized data obtained by the wire reception means, thereby producing data having a data quantity of one unit for radio transmission, adding data concerning the assembly or segmentation of the packet structure to the data produced as a result of the assembly or segmentation as overhead information, and providing the data having the overhead information added thereto with a data structure for radio transmission; and
a radio transmission means for conducting radio transmission of the data provided with the data structure produced by the data conversion means via a predetermined radio transmission path.

7. A transmission device according to claim 6, wherein when the data quantity obtained as a result of the assembly or segmentation is less than the data quantity of one unit, the data conversion means disposes invalid data in the remaining section to produce the data structure for radio transmission.

8. A transmission device according to claim 6 or 7, wherein the data conversion means adds header information for radio transmission, besides the overhead information, to produce the data structure for radio transmission.

9. A transmission device according to claim 6, 7 or 8 further comprising a storage means for temporarily storing the data converted by the data conversion means,
wherein upon a request from the other party of the radio communication, the radio transmission means again retransmits the data stored in the storage means.

10. A transmission device according to claim 6, 7, 8 or 9 wherein when the data received by the wire reception means is data subjected to isochronous transfer via the wire transmission path, the radio transmission means secures a radio transmission path, then the data conversion means adds overhead information to data of every predetermined unit, and the radio transmission means radio-transmits resultant data, and
when the data received by the wire reception means is data subjected to asynchronous transfer via the wire transmission path, the data conversion means adds overhead information to data of every unit, the unit being shorter than the unit for the data subjected to isochronous transfer, and the radio transmission means radio-transmits resultant data.

11. A transmission device comprising:
a radio reception means for receiving data provided with a predetermined data structure and transmitted via a predetermined radio transmission path;
a data conversion means for conducting segmentation or assembly on data received by the radio reception means on the basis of overhead information included in the received data and producing packetized data; and
a wire transmission means for sending out the data packetized by the data conversion means to a wire transmission path.

12. A transmission device according to claim 11, comprising:
a radio transmission means for transmitting answer data to the transmission source when data can be received correctly by the radio reception means.
